# FASCICULE DE BREVET EUROPEEN

(11) **EP 0 433 154 B1**
(45) Date de publication et mention de la délivrance du brevet: **17.01.1996**
(21) Numéro de dépôt: 90403512.8
(22) Date de dépôt: 10.12.1990
(51) Int. Cl.: H04J 3/16, H04L 12/64

(54) **Convertisseur synchrone-asynchrone**
Synchron-Asynchron-Umsetzer
Synchronous-asynchronous converter

(30) Priorité: 13.12.1989 FR 8916497
(43) Date de publication de la demande: 19.06.1991
(73) Titulaire: ALCATEL CIT, F-75008 Paris (FR)
(72) Inventeur: Balzano, Jean-Michel, F-22700 Perros-Guirec (FR); Le Bouffant, Alain, F-22300 Lannion (FR)
(74) Mandataire: Weinmiller, Jürgen

(56) Documents cités:
- EP-A- 0 094 322
- DE-A- 3 816 747
- US-A- 4 612 636

## Description

La présente invention concerne le domaine des télécommunications et permet le raccordement de systèmes de commutation basés sur la technique temporelle asynchrone ATM à des systèmes basés sur la technique temporelle synchrone STM. En effet, l'introduction progressive des commutateurs du type ATM dans le réseau actuel nécessite leur interfonctionnement avec des commutateurs du type STM.

La technique STM se caractérise par le multiplexage de plusieurs communications au débit de 64 Kbit/s sur une même trame MIC. Cette trame est découpée en 32 intervalles temporels IT0 à IT31. Chaque IT est réservé à une communication particulière et possède un débit de 64 Kbit/s. Le début de la trame est repéré par un motif connu contenu dans l'IT0, appelé motif de synchronisation.

La technique ATM se caractérise par le multiplexage sur un même support, de cellules de par exemple 36 octets identifiées par un en-tête de 4 octets et possèdant un contenu utile de 32 octets. A une communication donnée correspond un en-tête donné. Le débit du support est indépendant de celui des communications qu'il achemine.

La conversion synchrone-asynchrone d'une trame MIC comprend donc :
- Dans le sens Synchrone vers Asynchrone :
   . la mémorisation de 32 octets de chaque canal de manière à former le contenu utile des cellules,
   . l'adjonction, à chaque cellule, d'un en-tête spécifique à chaque canal,
   . le multiplexage des différentes cellules sur un même support,
- dans le sens Asynchrone vers Synchrone :
   . l'identification du canal par analyse de l'en-tête de la cellule reçue,
   . la mémorisation du contenu utile des cellules reçues,
   . la lecture d'un octet dans la mémoire et émission sur le MIC à chaque temps IT.

Les dispositifs habituellement utilisés pour la conversion synchrone-asynchrone réalisent la conversion d'un unique canal numérique, à bas ou à haut débit, et comportent un celluleur et un décelluleur. Le celluleur constitue une cellule à partir du train numérique par comptage des bits, ou des octets incidents, puis ajoute une étiquette qui identifie le service. Le décelluleur réalise l'opération inverse et restitue un train récurrent à partir des informations contenues dans les cellules de même étiquette.

Le document DE-A-38 16 747 décrit un central de commutation de paquets travaillant sur le principe de la commutation de circuits, et qui comporte des circuits désassembleurs de cellules et des circuits réassembleurs de cellules pour passer du mode asynchrone au mode synchrone, et réciproquement. Ces deux fonctions sont réalisées par des circuits distincts. Chacun de ces circuits comporte une mémoire constituée de 32 mémoires élémentaires en parallèle. Chaque mémoire élémentaire est du type premier entré -premier sorti. Des moyens de commande commandent individuellement chaque mémoire élémentaire, en vue de réaliser en outre un multiplexage/démultiplexage de plusieurs canaux à 64 Kbits/s.

Le document US-A-4 612 636 décrit un dispositif assurant une conversion asynchrone-synchrone seulement. Il comporte :
- une mémoire d'entrée, du type premier entré -premier sorti, pour stocker des paquets synchrones comportant 21 bits dont 5 bits d'adresse identifiant un canal de sortie parmi trente deux, et 16 bits de signaux vocaux;
- une mémoire à accès aléatoire pour stocker les octets de signaux vocaux, comportant trente deux blocs correspondant respectivement aux trente deux canaux de sortie, chaque block stockant 16 octets successifs d'un même canal;
- une mémoire stockant des pointeurs de lecture et des pointeurs d'écriture, pour chacun des trente deux canaux.

L'invention a pour but de réaliser un convertisseur synchrone/asynchrone ,et inverse,capable de mettre en cellules un multiplex synchrone entrant en affectant soit un numéro de circuit virtuel à chaque intervalle temporel des trames dudit multiplex synchrone, soit un numéro de circuit virtuel aux 32 intervalles temporels d'une trame, et inversement, capable de mettre en trames synchrones les cellules d'un multiplex asynchrone entrant.

L'invention a pour objet un convertisseur synchrone/asynchrone, et inverse, relié à un réseau synchrone dans lequel des informations sont acheminées par des multiplex synchrones tramés dont chaque trame est divisée en trente deux intervalles temporels affectés à au moins un canal de communication, et à un réseau asynchrone dans lequel des informations sont acheminées par des cellules ayant un en-tête de 4 octets et une partie de trente deux octets; comprenant :
une mémoire à accès aléatoire ayant un premier port et un deuxième port, un circuit de gestion du premier port relié d'une part au premier port et d'autre part à une ligne multiplex synchrone entrante acheminant un multiplex synchrone entrant, et à une ligne multiplex synchrone sortante acheminant un multiplex synchrone sortant, lesdits multiplex synchrones entrant et sortant étant des multiplex tramés, et un circuit de gestion du deuxième port relié d'une part au deuxième port et d'autre part à une liaison multiplex asynchrone entrante et à une liaison multiplex asynchrone sortante acheminant chacune un multiplex asynchrone constitué de cellules relatives chacune à un canal; dans le sens réseau synchrone vers réseau asynchrone, le circuit de gestion du premier port assurant la mémorisation dans la mémoire d'au moins trente deux octets de chaque canal; le circuit de gestion du deuxième port assurant, par lecture de la mémoire, la cellulisation des données mémorisées et l'émission des cellules sur la liaison asynchrone sortante; et dans le sens réseau asynchrone vers réseau synchrone, le circuit de gestion du deuxième port assurant la mémorisation dans la mémoire d'au moins une cellule reçue par la liaison asynchrone entrante; le circuit de gestion du premier port assurant, par lecture de la mémoire, l'émission en trames sur la liaison multiplex synchrone sortante;
caractérisé par le fait que dans un premier mode de fonctionnement chaque intervalle temporel d'une trame est affecté à un canal, et que dans un deuxième mode de fonctionnement tous les intervalles temporels de chaque trame sont affectés au même canal, le mode de fonctionnement étant imposé par une commande extérieure, appliquée au circuit de gestion du deuxième port.

L'invention sera bien comprise par la description qui va suivre d'exemples de réalisation illustrés par les figures annexées dans lesquelles :
- la figure 1 représente schématiquement un convertisseur synchrone/asynchrone de l'invention.
- les figures 2A et 2B représentent l'organisation d'une mémoire double port de la figure 1, la figure 2A étant relative à un mode de fonctionnement M32, et la figure 2B étant relative à un mode de fonctionnement M1,
- la figure 3 donne le format du mot sémaphore de la mémoire,
- la figure 4 donne le format d'un pointeur d'écriture de la mémoire,
- la figure 5 donne le format d'un pointeur de lecture de la mémoire,
- la figure 6 donne le format d'un descripteur de la mémoire,
- la figure 7 donne le format de l'en-tête des cellules émises par le convertisseur.

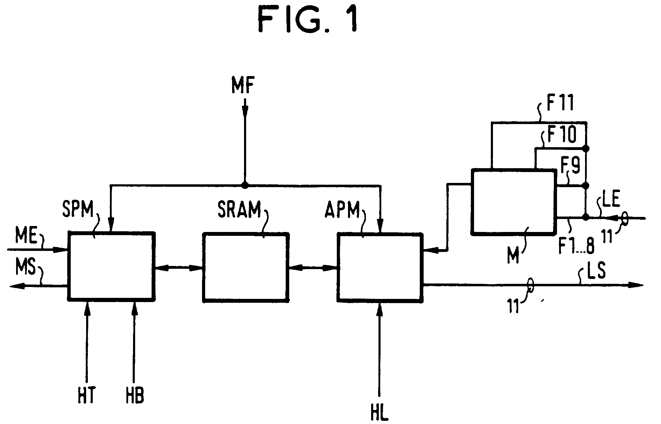

La figure 1 représente schématiquement le convertisseur synchrone/asynchrone de l'invention, comportant une mémoire double port, SRAM, à accès aléatoire, ayant un premier port nommé synchrone et un deuxième port nommé port asynchrone, un circuit de gestion du port synchrone SPM, un circuit de gestion du port asynchrone, APM, et une mémoire cellules M, du type FIFO.

Le circuit de gestion du port synchrone, SMP, est relié d'une part à une ligne multiplex synchrone entrante ME et à une ligne multiplex synchrone sortante MS et d'autre part au port synchrone de la mémoire double port SRAM; il reçoit un signal d'horloge trame HT et un signal d'horloge bit HB d'un récupérateur de rythme, non représenté, relié à la ligne multiplex entrante ME.

Le circuit de gestion du port asynchrone, APM, est relié d'une part au port asynchrone de la mémoire double port SRAM et d'autre part directement à une liaison asynchrone sortante LS, et par l'intermédiaire de la mémoire cellules M à une liaison asynchrone entrante LE ; il reçoit un signal d'horloge HL d'une horloge locale, non représentée. Les liaisons asynchrones entrante et sortante sont des liaisons parallèles, à onze fils chacune : huit fils bits pour les données, un fil début cellule au niveau 0 au début d'une cellule, c'est-à-dire au premier octet de la cellule pleine, un fil cellule pleine au niveau 0 pendant toute la durée d'une cellule pleine, et un fil signal d'horloge octet au débit de la liaison asynchrone.

La mémoire cellules M est reliée en entrée à la liaison asynchrone entrante LE et en sortie au circuit de gestion APM. La mémoire cellules M a une largeur de 9 bits dont 8 bits sont reliés aux huit fils bits, F1/8, le neuvième bit étant relié au fil début cellule F9 ; une entrée de validation d'écriture est reliée au fil cellule pleine, F10, pour mémoriser les cellules pleines entrantes, et une entrée écriture est reliée au fil signal d'horloge F11. La mémoire cellules M constitue un tampon destiné à abaisser le débit binaire reçu par la liaison asynchrone entrante LE, pour le rendre compatible avec la vitesse de traitement du circuit de gestion du deuxième port APM ; la mémoire M ne contient que des cellules pleines.

Les circuits de gestion du port synchrone SPM et de gestion du port asynchrone APM sont chacun un réseau programmable de portes logiques, tel que par exemple le composant XC 3090 commercialisé par la société XILINX ; il s'agit d'un composant standard dont la personnalisation est effectuée par programmation, lors de l'initialisation du convertisseur, d'une mémoire statique interne au composant.

Le convertisseur de l'invention peut fonctionner selon deux modes de fonctionnement, le choix du mode étant effectué par une commande MF extérieure au convertisseur et agissant sur les circuits de gestion SPM et APM. Dans un premier mode de fonctionnement, désigné par la suite par mode M32, un numéro de circuit virtuel est affecté à chaque intervalle temporel d'une trame, et dans un second mode de fonctionnement, désigné par la suite par mode M1, un numéro de circuit virtuel est affecté aux 32 intervalles temporels d'une trame du multiplex synchrone.

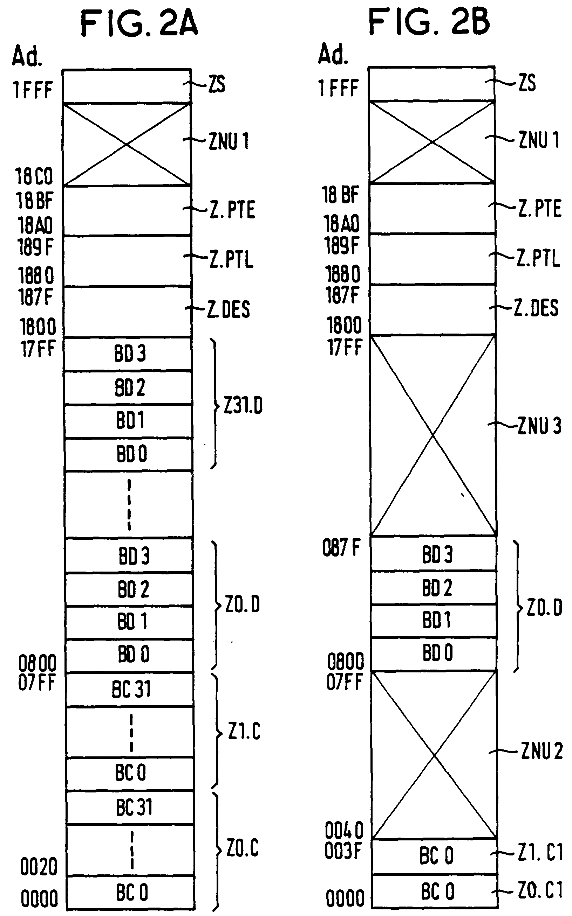

La mémoire SRAM comporte 8192 mots d'un octet et les figures 2A et 2B donnent l'organisation de la mémoire en mode M32 et en mode M1, respectivement. Dans ces figures les adresses Ad des octets sont en hexadécimal, l'adresse 0000 étant celle du premier octet, et l'adresse 1FFF étant celle du 8192ème octet de la mémoire.

Dans la figure 2A on trouve successivement, à partir du premier octet, une première zone celluleur Z0.C, une deuxième zone celluleur Z1.C, trente deux zones décelluleurs Z0.D à Z31.D, une zone descripteurs Z.DES, une zone pointeurs de lecture Z.PTL, une zone pointeurs d'écriture Z.PTE, une zone non utilisée ZNU1, et une zone sémaphore ZS.

Les zones celluleurs Z0.C et Z1.C comportent chacune 32 blocs celluleurs BC0 à BC31, de 32 octets chacun. Les adresses de début et de fin de l'ensemble de ces deux zones sont 0000 et 07FF, respectivement.

Les zones décelluleurs Z0.D à Z31.D comportent chacune quatre blocs décelluleurs BD0 à BD3, de 32 octets chacun. Les adresses de début et de fin de l'ensemble de ces trente deux zones sont 0800 et 17FF, respectivement.

La zone descripteurs Z.DES comporte 128 descripteurs d'un octet chacun ; les adresses de début et de fin de cette zone sont 1800 et 187F, respectivement.

La zone pointeurs de lecture Z.PTL comporte 32 pointeurs de lecture d'un octet chacun ; les adresses de début et de fin de cette zone sont 1880 et 189F, respectivement.

La zone pointeurs d'écriture Z. PTE comporte 32 pointeurs d'écriture d'un octet chacun ; les adresses de début et de fin de cette zone sont 18AO et 18BF, respectivement.

La zone non utilisée ZNU1 comporte 1855 octets.

La zone sémaphore est un octet d'adresse 1FFF ; c'est le dernier octet de la mémoire.

Dans la figure 2B on trouve successivement, à partir du premier octet, d'adresse 0000, une première zone celluleur Z0.C1, une deuxième zone celluleur Z1.C1, une zone non utilisée ZNU2, une zone décelluleur Z0.D, une zone non utilisée ZNU3, une zone descripteur Z.DES, une zone pointeur de lecture Z.PTL, une zone pointeur d'écriture Z.PTE, une zone non utilisée ZNU1, et une zone sémaphore ZS.

Les zones celluleurs Z0.C1 et Z1.C1 sont constituées chacune par un bloc BC0 de 32 octets. Les adresses de début et de fin de l'ensemble de ces deux zones sont 0000 et 003F, respectivement.

La zone inutilisée ZNU2 comporte 1984 octets et se termine à l'adresse 07FF, qui correspond, dans la figure 2A, à la fin de la deuxième zone celluleur Z1.C.

La zone décelluleur Z0.D comporte, comme dans le cas de la figure 2A, quatre blocs décelluleurs BD0 à BD3. Les adresses de début et de fin de cette zone sont 0800 et 087F. Les adresses de début et de fin sont les mêmes que celles, dans la figure 2A, de la zone décelluleur Z0.D.

La zone inutilisée ZNU3 compte 3968 octets et se termine à l'adresse 17FF, qui correspond, dans la figure 2A, à la fin de la zone celluleur Z31.D ; cette zone inutilisée correspond aux zones décelluleurs Z1.D à Z31.D de la figure 2A.

La zone descripteur Z.DES comporte 128 octets, dont seulement les quatre premiers sont utilisés ; comme dans la figure 2A, les adresses de début et de fin de cette zone sont 1800 et 187F, respectivement.

La zone pointeur de lecture Z.PTL comporte 32 octets dont seul le premier est utilisé ; comme dans la figure 2A, les adresses de début et de fin de cette zone sont 1880 et 189F, respectivement.

La zone pointeur d'écriture Z.PTE comporte 32 octets dont seul le premier est utilisé ; comme dans la figure 2A, les adresses de début et de fin de cette zone sont 18A0 et 18BF, respectivement.

La zone utilisée ZNU1, est identique à celle de la figure 2A.

La zone sémaphore ZS est identique à celle de la figure 2A ; l'octet qui la constitue a également pour adresse 1FFF.

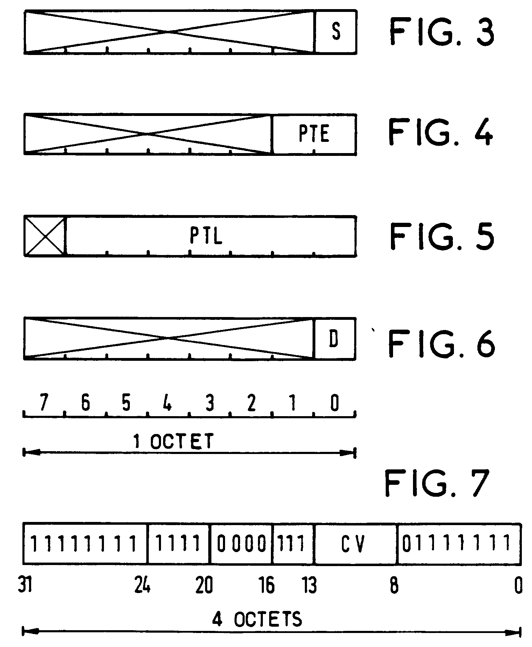

La figure 3 représente la structure de l'octet de la zone sémaphore ZS des figures 2A et 2B. Cet octet est utilisé pour le dialogue entre le circuit de gestion du port synchrone SPM et le circuit de gestion du port asynchrone APM, et seul le bit S de poids faible est utilisé. Le bit S est positionné par le circuit SPM ; il passe à zéro à la fin du remplissage de la zone celluleur Z0.C, ou Z0.C1, et à un à la fin du remplissage de la zone celluleur Z1.C ou Z1.C1, de la mémoire SRAM ; le bit S est exploité par le circuit APM.

La figure 4 représente la structure d'un pointeur d'écriture constitué par un octet et utilisé par le circuit APM pour l'affectation des blocs de chaque zone décelluleur, Z0.D à Z31.D. Il existe un pointeur d'écriture par zone décelluleur pour indiquer le bloc de ladite zone dans lequel sera rangée la prochaine cellule arrivant sur le canal correspondant audit bloc. Dans l'octet d'un pointeur d'écriture seuls les bits 0 et 1, repérés PTE, sont utilisés pour indiquer le numéro du bloc où ranger le contenu d'une cellule reçue par lecture de la mémoire cellules M.

La figure 5 représente la structure d'un pointeur de lecture constitué par un octet et utilisé par le circuit SPM pour l'identification de l'octet à lire dans chaque zone décelluleur. Il existe un pointeur d'écriture par zone décelluleur pour indiquer l'octet qui doit être émis sur la ligne multiplex synchrone sortante MS. Dans l'octet d'un pointeur de lecture les bits 0 à 6, repérés PTL, indiquent le numéro de l'octet à émettre sur la ligne multiplex synchrone sortante MS ; le bit 7 de l'octet n'est pas utilisé.

La figure 6 représente la structure d'un descripteur, constitué par un octet et utilisé pour connaître l'état d'occupation des blocs des zones décelluleurs. Il existe un descripteur par bloc, soit 128 descripteurs. Un descripteur indique l'état, libre ou occupé, d'un bloc. Dans l'octet d'un descripteur seul le bit 0, repéré D, est utilisé, le bit D a la valeur 0 pour indiquer l'état libre d'un bloc, et la valeur 1 pour indiquer l'état occupé d'un bloc.

Les opérations celluleur et décelluleur sont totalement asynchrones. Les conflits d'accès à la mémoire double port SRAM sont résolus en travaillant par zones réservées à la lecture ou à l'écriture. Le circuit de gestion du port synchrone SPM fonctionne en écriture dans le sens celluleur (ligne multiplex synchrone entrante ME vers liaison asynchrone sortante LS) et en lecture dans le sens décelluleur (liaison asynchrone entrante LE vers ligne multiplex synchrone sortante MS). Le circuit de gestion du port asynchrone APM fonctionne en lecture dans le sens celluleur et en écriture dans le sens décelluleur.

Le fonctionnement du convertisseur en cellulisation dans le mode M32 utilise les zones celluleurs Z0.C et Z1.C, et la zone sémaphore ZS, figure 2A, qui constituent, pour ce mode la partie celluleur de la mémoire SRAM. A chaque octet d'un même bloc des zones celluleurs correspond l'un des 32 canaux à celluliser.

En pratique, un bloc contient les données des 32 intervalles temporels IT0 à IT31 d'une trame du multiplex synchrone entrant ; par conséquent il y a en permanence 64 trames stockées dans la mémoire SRAM par le circuit SPM. Le mode de stockage dans l'ensemble des deux zones celluleurs est du type tampon circulaire. Pour la cellulisation les fonctions remplies par le circuit SPM sont :
- la réception du multiplex synchrone entrant, acheminé par la ligne multiplex synchrone entrante ME,
- la mise en parallèle, intervalle temporel par intervalle temporel, des huit bits de chaque intervalle temporel ; le premier bit reçu est celui de poids fort, le dernier bit reçu celui de poids faible,
- l'écriture dans la mémoire SRAM en respectant l'ordre des IT. Le circuit SPM comporte un compteur d'adresses, modulo 2048, synchronisé par le signal d'horloge trame HT pour garantir que l'intégrité d'une trame reçue est conservée dans le bloc où elle est stockée. Les IT successifs sont écrits à des adresses croissantes, l'IT0 en premier et l'IT31 en dernier. Une adresse donnée contient toujours un IT de même rang. L'écriture de la mémoire SRAM est effectuée au rythme du multiplex synchrone entrant, c'est-à-dire un bloc en 125 microsecondes et une zone en 4 ms. En permanence les 64 dernières trames reçues sont stockées dans la mémoire SRAM ; une écriture à une même adresse aura lieu 64 trames plus tard, soit 8 ms.
- l'écriture de l'octet sémaphore ZS de la mémoire SRAM en fin de remplissage de zone. Il contient le numéro, 0 ou 1, de la zone celluleur dans laquelle le circuit SPM ne travaille pas. Cette indication de libération de zone est utilisée par le circuit APM pour émettre les cellules correspondant à la zone celluleur libre.

Pour la cellulisation le circuit APM comporte un compteur d'IT et un compteur de blocs. Le compteur d'IT indique le numéro du canal en cours de cellulisation et le compteur de blocs indique le numéro de bloc celluleur en cours de cellulisation. En mode de fonctionnement M32 ces deux compteurs sont des compteurs modulo 32. Le compteur de blocs est incrémenté après lecture d'un octet d'un bloc, et le compteur d'IT est incrémenté après lecture de 32 octets, c'est-à-dire après lecture d'un octet dans chacun des 32 blocs d'une zone celluleur.

Pour la cellulisation les fonctions remplies par le circuit APM, en mode M32, sont indiquées ci-dessous, étant rappelé que chaque zone celluleur Z0.C et Z1.C comporte 32 blocs et que chaque bloc contient un octet de chacun des canaux à celluliser ; par conséquent une zone pleine contient 32 octets utiles de chaque canal, c'est-à-dire le contenu d'une cellule de chaque canal. Après une opération de cellulisation le circuit APM lit l'octet sémaphore, et si le bit S de l'octet sémaphore a changé d'état le circuit APM mémorise la nouvelle valeur du bit S et les opérations de cellulisation dans la zone celluleur indiquée par le bit S commencent.

Les compteurs d'IT et de blocs étant à zéro, le circuit APM procède :
- à l'envoi, sur la liaison asynchrone sortante LS, d'un en-tête de quatre octets, figure 7, qui correspond au canal IT0 dont les données sont stockées dans l'octet 0 de chaque bloc de la zone celluleur,
- à la lecture dans la mémoire SRAM et à l'envoi sur la liaison asynchrone sortante LS de l'octet 0 du bloc BC0 de la zone celluleur,
- à l'incrémentation du compteur de blocs qui indique alors le bloc BC1 de la zone celluleur, à la lecture et à l'envoi sur la liaison LS de l'octet 0 du bloc BC1, et ainsi de suite jusqu'à la lecture de l'octet 0 du bloc BC31 de la zone celluleur,
- à l'incrémentation du compteur d'IT qui indique alors IT1, les opérations précédentes indiquées pour l'IT0 étant répétées pour chacun des 31 canaux restant. Lorsque l'octet 31 du bloc BC31 de la zone celluleur est lu et envoyé sur la liaison asynchrone sortante LS, le compteur d'IT et le compteur de blocs sont à zéro, et le circuit APM vient scruter l'octet sémaphore pour détecter un changement d'état du bit S ; si l'état n'a pas changé le circuit APM émet des cellules vides sur la liaison LS,
- La figure 7 représente la structure de l'en-tête ; dans le champ réservé au numéro de circuit virtuel bits 8 à 15, seuls les 5 bits de poids faibles 8 à 13, repérés CV, sont utilisés par le circuit APM. Ces 5 bits correspondent au numéro de l'IT utilisé ; pour l'IT0 l'indication de circuit virtuel CV est 00000, et pour l'IT31 l'indication de circuit virtuel CV est 11111.

La vitesse de fonctionnement du circuit APM est choisie de telle manière que la cellulisation complète d'une zone est effectuée dans un temps inférieur au temps de son remplissage par le circuit SPM. En conséquence, à la fin de la cellulisation des 32 canaux, le circuit APM scrute l'octet sémaphore pour détecter un nouveau changement du bit S ; tant que le bit S n'a pas changé d'état le circuit APM émet des cellules vides sur la liaison asynchrone sortante LS.

Le fonctionnement du convertisseur en cellulisation dans le mode M1 utilise les zones celluleurs Z0.C1 et Z1.C1 et la zone sémaphore ZS, figure 2B, qui constituent, pour ce mode, la partie celluleur de la mémoire SRAM. Chaque zone celluleur est réduite à un bloc, BC0, qui contient 32 octets numérotés de 0 à 31 qui constituent le contenu utile du canal à celluliser. La structure et l'utilisation de l'octet sémaphore sont les mêmes que dans le mode de fonctionnement M32 décrit précédemment.

Le fonctionnement du circuit SPM est identique à celui indiqué pour le mode M32 ; toutefois seules les 2 dernières trames du multiplex synchrone entrant sont stockées dans la mémoire SRAM, chaque bloc des deux zones celluleurs contenant une trame. Une écriture à une même adresse aura donc lieu 2 trames plus tard, soit 250 microsecondes ; dans ce mode M1 le compteur d'adresses du circuit SPM est modulo 64.

Comme dans le mode M32 la cellulisation commence lorsque le circuit APM a détecté le changement d'état du bit S de l'octet et sémaphore. Dans ce mode M1, le compteur d'IT du circuit APM est toujours modulo 32, mais comme chaque zone celluleur ne comporte qu'un bloc, le compteur de bloc du circuit APM est, dans ce mode M1, bloqué à zéro. Dès que le circuit APM a détecté le changement d'état du bit S, il procède :
- à l'envoi, sur la liaison asynchrone sortante LS, d'un en-tête de quatre octets, dont la structure est identique à celle de l'en-tête indiquée dans le mode M32 et représentée figure 7. Dans le mode M1, un seul canal étant cellulisé l'indication de circuit virtuel CV est 00000,
- à la lecture dans la mémoire SRAM et l'envoi sur la liaison asynchrone sortante LS des 32 octets du bloc de la zone celluleur indiqué par le bit S.

L'ordre de lecture des octets dans le bloc est le même qu'à l'écriture, c'est-à-dire l'octet contenu dans l'IT0 d'abord.

De même que dans le mode de fonctionnement M32 la vitesse de fonctionnement du circuit APM est choisie de manière que le temps de cellulisation d'une zone celluleur est inférieur au temps de son remplissage par le circuit SPM.

Le fonctionnement du convertisseur en décellulisation utilise, dans les deux modes de fonctionnement M32 et M1, la mémoire cellules M, du type FIFO dans laquelle les cellules entrantes sont stockées.

Le vidage de cette mémoire M est effectué par le circuit de gestion du port asynchrone APM qui possède son propre signal horloge cellule obtenu par division du signal d'horloge HL délivré par l'horloge locale.

Pour un vidage correct, le circuit de gestion APM doit lire, dans la mémoire M, le premier octet d'une cellule sur la transition du signal horloge cellule ; pour cela la mémoire M possède une largeur de 9 bits répartis en 8 bits destinés à stocker les données des cellules et un neuvième bit destiné à indiquer le début d'une cellule ; ce neuvième bit est positionné à zéro lors du stockage dans la mémoire cellules M du premier octet d'une cellule. Le processus de synchronisation est alors le suivant :
- lecture systématique de la mémoire M sur la transition du signal d'horloge cellule,
- si le neuvième bit lu est actif, alors la synchronisation est effective, le circuit de gestion APM procède à la lecture et au traitement des 35 octets restant de la cellule,
- si le neuvième bit est inactif il n'y a pas lecture de la mémoire cellules M.

Le fonctionnement du convertisseur en décellulisation, dans le mode M32, utilise des zones décelluleurs Z0.D à Z31.D, la zone descripteur Z.DES, la zone pointeur de lecture Z.PTL et la zone pointeur d'écriture Z.PTE, de la mémoire SRAM, figure 2A, qui constituent pour le mode M32, la partie décelluleur de la mémoire. Chaque bloc des zones décelluleurs contient une cellule à décelluliser, chaque zone étant affectée à l'un des 32 canaux à décelluliser. Chacun des 128 descripteurs est affecté à un bloc des zones décelluleurs, pour indiquer l'état libre ou non, de ce bloc. Chacun des 32 pointeurs d'écriture est affecté à une zone décelluleur, pour indiquer le bloc dans lequel sera rangée la prochaine cellule arrivant sur le canal correspondant. Chacun des 32 pointeurs de lecture est affecté à une zone décelluleur. Les fonctions remplies par le circuit de gestion APM sont, lorsque la synchronisation de la mémoire cellules M est acquise :
- lecture de l'en-tête d'une cellule reçue, et mémorisation en interne du numéro de circuit virtuel contenu dans l'en-tête ; les cinq bits de poids faible du numéro de circuit virtuel indiquent, en binaire, le numéro de la zone décelluleur où le circuit APM doit ranger le contenu utile de la cellule reçue,
- lecture du pointeur d'écriture de ladite zone, qui indique le numéro de bloc où stocker le contenu utile de la cellule reçue,
- rangement du contenu utile de la cellule dans le bloc ; le rangement dans un bloc se fait octet par octet, et à des adresses croissantes.
- positionnement à 1 du descripteur du bloc,
- incrémentation d'une unité modulo 4 du pointeur d'écriture de la zone où la cellule est rangée.

Pour la décellulisation le circuit de gestion du port synchrone, SPM, comporte un compteur d'intervalles temporels, modulo 32, et un compteur de zones, modulo 32, utilisés dans les deux modes M32 et M1, le compteur de zones étant bloqué à zéro dans le mode M1 puisqu'il n'y a qu'une zone décelluleur dans ce mode. Le compteur d'intervalles temporels est synchronisé par le signal d'horloge trame HT, figure 1. En mode M32 le compteur de zones avance au rythme du compteur d'intervalles temporels.

Les fonctions remplies par le circuit SPM en mode M32 sont :
- lecture du pointeur de lecture correspondant à la zone indiquée par le compteur de zones,
- lecture du descripteur du bloc correspondant au pointeur de lecture, pour connaître l'état, vide ou non, du bloc ; le numéro de bloc est obtenu par division par 32 du numéro contenu dans le pointeur de lecture,
- si le bloc est rempli, lecture de l'octet donné par le pointeur de lecture, et incrémentation du pointeur de lecture du bloc ; si le bloc n'est pas entièrement lu, lecture du pointeur de la lecture correspondant à un nouvel intervalle temporel ; si le bloc est entièrement lu, mise à zéro du descripteur et lecture du pointeur de lecture correspondant à un nouvel intervalle temporel indiqué par le compteur d'intervalles,
- si le bloc n'est pas rempli, émission d'un code de repos d'un octet sur la ligne multiplex synchrone sortante.

Le fonctionnement du convertisseur en décellulisation, dans le mode M1, utilise, la zone décelluleur Z0.D, la zone descripteur Z.DES, la zone pointeur de lecture Z.PTL et la zone pointeur d'écriture Z.PTE, de la mémoire SRAM, figure 2B, qui constituent, pour le mode M1, la partie décelluleur de la mémoire. Chaque bloc de la zone décelluleur contient une cellule à décelluliser, chaque bloc étant affecté à un canal à décelluliser.

Les fonctions remplies par le circuit de gestion APM sont les mêmes que celles indiquées pour la décellulisation en mode M32. Il faut remarquer que dans le mode M1 il n'y a qu'une zone décelluleur Z0.D, et que chaque cellule reçue contient les 32 intervalles temporels d'un canal, donc d'une trame du multiplex synchrone sortant. Le numéro de circuit virtuel indique toujours la même zone, Z0.D ; il n'y a donc qu'un pointeur d'écriture pour indiquer le bloc où stocker le contenu de la cellule reçue, et quatre descripteurs, un pour chaque bloc de la zone.

Le fonctionnement du circuit SPM, dans ce mode M1, est comparable à celui dans le mode M32 ; cependant en mode M1, il n'y a qu'une zone décelluleur, Z0.D, et par conséquent qu'un pointeur de lecture qui est lu quel que soit le numéro d'intervalle temporel délivré par le compteur d'intervalles temporels du circuit SPM. Le compteur de zones est bloqué à zéro. Les fonctions remplies par le circuit de gestion SPM sont :
- lecture du pointeur de lecture,
- lecture du descripteur du bloc correspondant au pointeur de lecture, pour connaître l'état d'un bloc ; un même descripteur est lu 32 fois consécutives puisqu'un descripteur est associé à un bloc et qu'un bloc contient les données de 32 IT consécutifs ; le premier octet d'un bloc est lu à IT=0, le dernier octet à IT=32,
- si le bloc est rempli, lecture de l'octet donné par le pointeur de lecture du bloc et incrémentation du pointeur de lecture ; si le bloc n'est pas entièrement lu, lecture du pointeur de lecture dès que le compteur d'intervalles de temps délivre un nouveau numéro d'IT ; si le bloc est entièrement lu, mise à zéro, D=0, du descripteur et lecture du pointeur de lecture dès que le compteur délivre un nouveau numéro d'IT,
- si le bloc n'est pas rempli, émission d'un code de repos d'un octet sur la ligne multiplex synchrone sortante.

Le convertisseur synchrone-asynchrone de l'invention est donc capable de fonctionner dans les modes M32 et M1, le choix étant effectué par la commande MF, extérieure au convertisseur. Bien entendu le choix du mode de fonctionnement est effectué à la mise en service du convertisseur, la commande venant agir sur les circuits de gestion SPM et APM comme indiqué précédemment afin de limiter en mode M1 les zones celluleur et décelluleur utilisées dans la mémoire SRAM, ainsi que le nombre de descripteurs, le nombre de pointeurs de lecture, et le nombre de pointeurs d'écriture.

## Revendications

1. Convertisseur synchrone-asynchrone, et inverse, relié à un réseau synchrone dans lequel des informations sont acheminées par des multiplex synchrones tramés dont chaque trame est divisées en trente deux intervalles temporels affectés à au moins un canal de communication, et à un réseau asynchrone dans lequel des informations sont acheminées par des cellules ayant un en-tête et une partie utile de trente deux octets ; comprenant : une mémoire (SRAM) à accès aléatoire ayant un premier port et un deuxième port ; un circuit de gestion du premier port (SPM) relié d'une part au premier port et d'autre part à une ligne multiplex synchrone entrante (ME) acheminant un multiplex synchrone entrant, et à une ligne multiplex synchrone sortante (MS) acheminant un multiplex synchrone sortant, lesdits multiplex synchrones entrant et sortant étant des multiplex tramés ; et un circuit de gestion du deuxième port (APM) relié d'une part au deuxième port et d'autre part à une liaison multiplex asynchrone entrante (LE) et à une liaison multiplex asynchrone sortante (LS) acheminant chacune un multiplex asynchrone constitué de cellules relatives chacune à un canal; dans le sens réseau synchrone vers réseau asynchrone,le circuit de gestion du premier port (SPM) assurant la mémorisation dans la mémoire (SRAM) d'au moins trente deux octets de chaque canal; le circuit de gestion du deuxième port (APM) assurant, par lecture de la mémoire, la cellulisation des données mémorisées et l'émission des cellules sur la liaison asynchrone sortante (LS) ; et dans le sens réseau asynchrone vers réseau synchrone, le circuit de gestion du deuxième port (APM) assurant la mémorisation dans la mémoire (SRAM) d'au moins une cellule reçue par la liaison asynchrone entrante (LE); le circuit de gestion du premier port (SPM) assurant, par lecture de la mémoire, l'émission en trames sur la liaison multiplex synchrone sortante (MS);
caractérisé par le fait que dans un premier mode de fonctionnement (M32) chaque intervalle temporel d'une trame est affecté à un canal, et que dans un deuxième mode de fonctionnement (M1) tous les intervalles temporels de chaque trame sont affectés au même canal, le mode de fonctionnement étant imposé par une commande (MF) extérieure, appliquée au circuit de gestion du premier port (SPM) et au circuit de gestion du deuxième port (APM).

2. Convertisseur synchrone-asynchrone selon la revendication 1, caractérisé par le fait que dans le premier mode de fonctionnement (M32) la mémoire (SRAM) comprend deux zones celluleurs (Z0.C, Z1.C) de chacune trente deux blocs celluleurs (BC0 à BC31) de trente deux octets chacun, chaque bloc contenant une trame à celluliser et chaque zone celluleur étant alternativement en écriture par le circuit de gestion du premier port (SPM) et en lecture par le circuit de gestion du deuxième port (APM), trente deux zones décelluleurs (Z0.D à Z31.D) de chacune quatre blocs décelluleurs (BD0 à BD3) de trente deux octets chacun, chaque zone décelluleur étant affectée à un canal et chaque bloc d'une zone décelluleur contenant une cellule relative au canal de ladite zone, une zone descripteurs (Z.DES) ayant un descripteur d'un octet par bloc décelluleur pour indiquer si le bloc est rempli ou vide, une zone pointeur de lecture ( Z.PTL) ayant un pointeur de lecture d'un octet par zone décelluleur pour indiquer en lecture un octet dans ladite zone décelluleur, une zone pointeur d'écriture (Z.PTE) ayant un pointeur d'écriture d'un octet par zone décelluleur pour indiquer en écriture un bloc de ladite zone où écrire une cellule reçue relative à ladite zone décelluleur, et une zone sémaphore (ZS) d'un octet pour indiquer quelle zone celluleur (Z0.C; Z1.C) est remplie.

3. Convertisseur synchrone-asynchrone selon la revendication 1, caractérisé par le fait que dans le deuxième mode de fonctionnement (M1) la mémoire (SRAM) comprend deux zones celluleurs (Z0.C1 et Z1.C1) de chacune un bloc (BC0) de trente deux octets, chaque bloc contenant une trame à celluliser et chaque zone celluleur étant alternativement en écriture par le circuit de gestion du premier port (SPM) et en lecture par le circuit de gestion du deuxième port (APM), une zone décelluleur (Z0.D) de quatre blocs décelluleurs (BD0 à BD3) de trente deux octets chacun, chaque bloc décelluleur contenant une cellule, une zone descripteurs (Z.DES) contenant quatre descripteurs d'un octet chacun, chaque descripteur étant affecté à un bloc décelluleur pour indiquer si le bloc est rempli ou vide, une zone pointeur de lecture (Z.PTL) ayant un pointeur de lecture d'un octet pour indiquer, en lecture, un octet de la zone décelluleur, une zone pointeur d'écriture (Z.PTE) ayant un pointeur d'écriture pour indiquer, en écriture, un bloc de la zone décelluleur où écrire une cellule reçue, et une zone sémaphore (ZS) d'un octet pour indiquer quelle zone celluleur (Z0.C1, Z1.C1) est remplie.

4. Convertisseur synchrone-asynchrone selon la revendication 1, caractérisé par le fait que le circuit de gestion du deuxième port (APM) est relié à la liaison asynchrone entrante (LE) par l'intermédiaire d'une mémoire cellules (M) de type FIFO, dans laquelle sont mémorisées les cellules pleines de la liaison asynchrone entrante (LE).

## Patentansprüche

1. Synchron-Asynchron-Wandler und umgekehrt, der einerseits an ein synchrones Netz angeschlossen ist, in dem Informationen über synchrone Zeitmultiplexsysteme in Rahmen übertragen werden, wobei jeder Rahmen in 32 Zeitintervalle unterteilt ist, die mindestens einem Nachrichtenkanal zugeordnet sind, und der andererseits an ein asynchrones Netz angeschlossen ist, in dem Informationen in Form von Zellen mit einem Vorspann und einem Nutzteil von 32 Bytes übertragen werden,
- mit einem frei adressierbaren Speicher (SRAM), der zwei Zugänge hat,
- mit einer Verwaltungsschaltung für den ersten Zugang (SPM), die einerseits an den ersten Zugang und andererseits an eine ankommende synchrone Multiplexleitung (ME), auf der ein ankommendes synchrones Multiplexsystem übertragen wird, sowie an eine abgehende synchrone Multiplexleitung (MS) angeschlossen ist, die ein abgehendes synchrones Multiplexsystem überträgt, wobei die ankommenden und abgehenden synchronen Multiplexsysteme in Rahmen strukturiert sind,
- und mit einer Verwaltungsschaltung für den zweiten Zugang (APM), die einerseits an den zweiten Zugang und andererseits an eine ankommende asynchrone Multiplexverbindung (LE) sowie an eine abgehende asynchrone Multiplexverbindung (LS) angeschlossen ist, welche je ein asynchrones Multiplexsystem bestehend aus Zellen bezüglich je eines Kanals übertragen, wobei in Richtung vom synchronen Netz zum asynchronen Netz die Verwaltungsschaltung des ersten Zugangs (SPM) die Speicherung von mindestens 32 Bytes jedes Kanals im Speicher (SRAM) bewirkt, während die Verwaltungsschaltung des zweiten Zugangs (APM) durch Lesen des Speichers die Zellenbildung der gespeicherten Daten und die Aussendung der Zellen auf der abgehenden asynchronen Verbindung (LS) bewirkt, während in der Richtung vom asynchronen zum synchronen Netz die Verwaltungsschaltung des zweiten Zugangs (APM) die Speicherung von mindestens einer über die ankommende asynchrone Verbindung (LE) empfangenen Zelle im Speicher (SRAM) bewirkt und die Verwaltungsschaltung des ersten Zugangs (SPM) den Speicher liest und die Daten in Rahmen auf der abgehenden synchronen Multiplexverbindung (MS) aussendet,
dadurch gekennzeichnet, daß in einem ersten Betriebsmodus (M32) jedes Zeitintervall eines Rahmens einem Kanal zugewiesen ist und daß in einem zweiten Betriebsmodus (M1) alle Zeitintervalle jedes Rahmens einem gemeinsamen Kanal zugewiesen sind, wobei die Betriebsart durch eine von außen kommende Steuerung (MF) aufgeprägt wird, die an die Verwaltungsschaltungen (SPM, APM) des ersten und des zweiten Zugangs angelegt werden.

2. Synchron-Asynchron-Wandler nach Anspruch 1, dadurch gekennzeichnet, daß im ersten Betriebsmodus (M32) der Speicher (SRAM) enthält:
- zwei Zellenbildungszonen (Z0.C, Z1.C) mit je 32 Zellenbildungsblöcken (BC0 bis BC31) von je 32 Bytes, wobei jeder Block einen in Zellen umzuwandelnden Rahmen enthält und jede Zellenbildungszone abwechselnd durch die Verwaltungsschaltung des ersten Zugangs (SPM) in die Schreibphase sowie durch die Verwaltungsschaltung des zweiten Zugangs (APM) in die Lesephase gebracht wird;
- 32 Zellenzerlegungszonen (Z0.D bis Z31.D) mit je vier Zellenzerlegungsblöcken (BD0 bis BD3) zu je 32 Bytes, wobei jede Zellenzerlegungszone einem Kanal zugewiesen ist und jeder Block einer Zellenzerlegungszone eine Zelle bezüglich des Kanals der Zone enthält;
- eine Deskriptorenzone (Z.DES) mit einem Deskriptor in Form eines Bytes je Zellenzerlegungsblock, um anzugeben, ob der Block gefüllt oder leer ist;
- eine Lesezeigerzone (Z.PTL) mit einem Lesezeiger in Form eines Bytes je Zellenzerlegungszone, um beim Lesen ein Byte in der Zellenzerlegungszone anzugeben;
- eine Schreibzeigerzone (Z.PTE) mit einem Schreibzeiger in Form eines Bytes je Zellenzerlegungszone, um beim Schreiben einen Block der Zone zu bezeichnen, in die eine empfangene Zelle bezüglich der Zellenzerlegungszone einzutragen ist;
- und eine Signalisierungszone (ZS) in Form eines Bytes, um anzugeben, welche Zellenbildungszone (Z0.C; Z1.C) gefüllt wird.

3. Synchron-Asynchron-Wandler nach Anspruch 1, dadurch gekennzeichnet, daß im zweiten Betriebsmodus (M1) der Speicher (SRAM) enthält:
- zwei Zellenbildungszonen (Z0.C1, Z1.C1) mit je einem Block (BC0) von je 32 Bytes, wobei jeder Block einen in Zellen umzuwandelnden Rahmen besitzt und jede Zellenbildungszone abwechselnd in der Schreibphase durch die Verwaltungsschaltung des ersten Zugangs (SPM) und in der Lesephase durch die Verwaltungsschaltung des zweiten Zugangs (APM) betrieben wird,
- eine Zellenzerlegungszone (Z0.D) mit vier Zellenzerlegungsblöcken (BD0 bis BD3) von je 32 Bytes, wobei jeder Zellenzerlegungsblock eine Zelle enthält,
- eine Deskriptorenzone (Z.DES) mit vier Deskriptoren in Form je eines Bytes, wobei jeder Deskriptor einem Zellenzerlegungsblock zugeordnet ist, um anzugeben, ob der Block gefüllt oder leer ist,
- eine Lesezeigerzone (Z.PTL) mit einem Lesezeiger in Form eines Bytes, um beim Lesen ein Byte der Zellenzerlegungszone zu bezeichnen,
- eine Schreibzeigerzone (Z.PTE) mit einem Schreibzeiger, um beim Schreiben einen Block der Zellenzerlegungszone anzugeben, in den eine empfangene Zelle zu schreiben ist,
- und eine Signalisierungszone (ZS) in Form eines Bytes, um anzugeben, welche Zellenbildungszone (Z0.C1; Z1.C1) gefüllt wird.

4. Synchron-Asynchron-Wandler nach Anspruch 1, dadurch gekennzeichnet, daß die Verwaltungsschaltung des zweiten Zugangs (APM) an die ankommende asynchrone Verbindung (LE) über einen Zellenspeicher (M) vom FIFO-Typ angeschlossen ist, in dem die vollen Zellen der asynchronen ankommenden Verbindung (LE) gespeichert werden.

## Claims

1. Synchronous-asynchronous, and vice versa, converter connected to a synchronous network in which information is carried by frame structured synchronous multiplexes in which each frame is divided into 32 time slots assigned to at least one communication channel and to an asynchronous network in which information is carried by packets having a header and a usable part of 32 bytes, comprising a random access memory (SRAM) having a first port and a second port, a first port management circuit (SPM) connected to the first port and to an incoming synchronous multiplex line (ME) carrying an incoming synchronous multiplex, and to an outgoing synchronous multiplex line (MS) carrying an outgoing synchronous multiplex, said incoming and outgoing synchronous multiplexes being frame structured multiplexes, and a second port management circuit (APM) connected to the second port and to an incoming asynchronous multiplex link (LE) and to an outgoing asynchronous multiplex link (LS) each carrying an asynchronous multiplex made up of packets each relating to one channel, in the synchronous network to asynchronous network direction, the first port management circuit (SPM) stores in the memory (SRAM) at least 32 bytes of each channel, the second port management circuit (APM) reading the memory to assemble the stored data into a packet and transmitting the packets on the outgoing asynchronous link (LS) and, in the asynchronous network to synchronous network direction, the second port management circuit (APM) stores in the memory (SRAM) at least one packet received on the incoming asynchronous link (LE), the first port management circuit (SPM) reading the memory to transmit frames on the outgoing synchronous multiplex link (MS);
characterized in that in a first operating mode (M32) each time slot of a frame is assigned to one channel and that in a second operating mode (M1) all the time slots of each frame are assigned to the same channel, the operating mode being imposed by an external command (MF) applied to the first port management circuit (SPM) and to the second port management circuit (APM).

2. Synchronous-asynchronous converter according to claim 1 characterized that in the first operating mode (M32) the memory (SRAM) comprises two packetizer areas (Z0.C, Z1.C) each of 32 packetizer blocks (BC0 through BC31) each of 32 bytes, each block containing a frame to be assembled into a packet and each packetizer area being alternately written by the first port management circuit (SPM) and read by the second port management circuit (APM), 32 depacketizer areas (Z0.D through Z31.D) each of four depacketizer blocks (BD0 through BD3) each of 32 bytes, each depacketizer area being assigned to one channel and each block of a depacketizer area containing a packet relating to the channel of said area, a descriptors area (Z.DES) having a descriptor of one byte for each depacketizer block to indicate if the block is full or empty, a read pointer area (Z.PTL) having a read pointer of one byte for each depacketizer area to indicate in read mode a byte in said depacketizer area, a write pointer area (Z.PTE) having a write pointer of one byte for each depacketizer area to indicate in write mode a block of said area or to write [sic] a received packet relating to said depacketizer area and a semaphore area (ZS) of one byte to indicate which packetizer area (Z0.C; Zl.C) is filled.

3. Synchronous-asynchronous converter according to claim 1 characterized in that in the second operating mode (M1) the memory (SRAM) comprises two packetizer areas (Z0.C1 and Z1.C1) each of one block (BC0) of 32 bytes, each block containing a frame to be assembled into a packet and each packetizer area being alternately written by the first port management circuit (SPM) and read by the second port management circuit (APM), a depacketizer area (Z0.D) of four depacketizer blocks (BD0 through BD3) each of 32 bytes, each depacketizer block containing one packet, a descriptors area (Z.DES) containing four descriptors each of one byte, each descriptor being assigned to one depacketizer block to indicate if the block is full or empty, a read pointer area (Z.PTL) with a read pointer of one byte to indicate, in read mode, a byte of the depacketizer area, a write pointer area (Z.PTE) having a write pointer to indicate, in write mode, a block of the depacketizer area in which to write a received packet, and a semaphore area (ZS) of one byte to indicate which packetizer area (Z0.C1, Z1.C1) is filled.

4. Synchronous-asynchronous converter according to claim 1 characterized in that the second port management circuit (APM) is connected to the incoming asynchronous link (LE) by an FIFO type packet memory (M) in which are stored the full packets of the incoming asynchronous link (LE).
